# EUROPEAN PATENT APPLICATION

(11) **EP 3 895 805 A1**
(43) Date of publication of application: **20.10.2021**
(21) Application number: 21168680.3
(22) Date of filing: 15.04.2021
(51) Int. Cl.: B01L 7/00, B01L 9/06, G01N 21/64

(54) **PORTABLE DETECTION APPARATUS USING ISOTHERMAL AMPLIFICATION**

(30) Priority: 17.04.2020 KR 20200046504
(71) Applicant: ConnectaGen Inc., Gyeonggi-do 12918 (KR)
(72) Inventor: Yim, Seon Hee, 16801 Gyeonggi-do (KR); Jung, Ju Seob, 13475 Gyeonggi-do (KR)
(74) Representative: Fuchs Patentanwälte Partnerschaft mbB

(57) **Abstract**

An apparatus for detecting portable isothermal amplification is disclosed. The apparatus of the present invention includes a display unit; a thermal block comprising a body made of a thermal conductive material, a first heater inserted into the body to heat the body, a plurality of mounting holes formed in the body to respectively mount a plurality of sample tubes, and a plurality of optical paths communicating with each of the plurality of mounting holes on each side of the body (the plurality of optical paths and the plurality of mounting holes form a plurality of channels); a plurality of light source units disposed on one side of the thermal block and each irradiating light to the plurality of sample tubes mounted in the plurality of mounting holes through the optical path; a plurality of light receiving units disposed on the other side of the thermal block and each receiving light transmitted through the plurality of sample tubes mounted in the plurality of mounting holes through the optical path; and a control unit for detecting whether a sample accommodated in the plurality of sample tubes is infected from the amount of change in data for each of the plurality of channels generated based on signals received from the plurality of light receiving units.

## Description

### CROSS-REFERENCE TO RELATED APPLICATION

This application claims priority to and the benefit of Korean Patent Application No. 1 0-2020-0046504, filed on April 17, 2020, the disclosure of which is incorporated herein by reference in its entirety.

### [Technical Field]

The present invention relates to an apparatus for detecting portable isothermal amplification, and more particularly, to an apparatus for detecting portable isothermal amplification having improved portability by simplifying the structure.

### [Background Art]

The content described in this section merely provides background information on the present embodiment and does not constitute the prior art.

Nucleic acid amplification technology is a technology mainly used in the fields of molecular biology and biotechnology, and is a method capable of amplifying trace amounts of nucleic acids in large quantities as required for analysis.

Nucleic acid amplification methods include isothermal amplification and non-isothermal amplification.

Here, isothermal amplification method includes LCR (Ligase Chain Reaction), NASBA (Nucleic Acid Sequence-Based Amplification), TMA (Transcription Mediated Amplification), SDA (Strand Displacement Amplification), and non-isothermal amplification method includes PCR (Polymerase Chain Reaction).

In order to amplify a trace amount of nucleic acid by a detectable amount, it is preferable to keep the temperature constant in both methods, particularly in the isothermal amplification method.

Conventional apparatuses for detecting nucleic acid amplification have a problem in that a conversion member such as a mirror that converts the movement path of light is required in order to irradiate light to the amplified nucleic acid or to receive light passing through the amplified nucleic acid.

### [Related Art Document]

### [Patent Document]

(Patent Document 0001) KRRegistered Patent No. 1866195 (registered on June 04, 2018)
(Patent Document 0002) KR Registered Patent No. 2069337 (registered on January 16, 2020)

### [Disclosure]

### [Technical Problem]

The present invention is directed to providing an apparatus for detecting portable isothermal amplification capable of diagnosing diseases by amplifying nucleic acids in real time.

In addition, the present invention is directed to providing an apparatus for detecting portable isothermal amplification that is easy to assemble due to a simple structure since it does not require a conversion member such as a mirror that converts the movement path of light.

The present invention is not limited to the technical problems mentioned above, and other technical problems not mentioned will be clearly understood by those of ordinary skill in the art from the following description.

### [Technical Solution]

The apparatus for detecting portable isothermal amplification according to an embodiment of the present invention may include a display unit; a thermal block comprising a body made of a thermal conductive material, a first heater inserted into the body to heat the body, a plurality of mounting holes formed in the body to respectively mount a plurality of sample tubes, and a plurality of optical paths communicating with each of the plurality of mounting holes on each side of the body (the plurality of optical paths and the plurality of mounting holes form a plurality of channels); a plurality of light source units disposed on one side of the thermal block and each irradiating light to the plurality of sample tubes mounted in the plurality of mounting holes through the optical path; a plurality of light receiving units disposed on the other side of the thermal block and each receiving light transmitted through the plurality of sample tubes mounted in the plurality of mounting holes through the optical path; and a control unit for detecting whether a sample accommodated in the plurality of sample tubes is infected from the amount of change in data for each of the plurality of channels generated based on signals received from the plurality of light receiving units, wherein the control unit, using an initial measurement value measured (in an initial measurement value measurement section) when there is no sample tube in the plurality of mounting holes, adds or subtracts a change value in level of an actual measurement result of the plurality of channels to/from the initial measurement value and display the amount of change in data for each channel on the display unit.

In addition, the apparatus for detecting portable isothermal amplification according to another embodiment of the present invention may include a display unit; a thermal block comprising a body made of a thermal conductive material, a first heater inserted into the body to heat the body, a plurality of mounting holes formed in the body to respectively mount a plurality of sample tubes, and a plurality of optical paths communicating with each of the plurality of mounting holes on each side of the body (the plurality of optical paths and the plurality of mounting holes form a plurality of channels); a plurality of light source units disposed on one side of the thermal block and each irradiating light to the plurality of sample tubes mounted in the plurality of mounting holes through the optical path; a plurality of light receiving units disposed on the other side of the thermal block and each receiving light transmitted through the plurality of sample tubes mounted in the plurality of mounting holes through the optical path; and a control unit for detecting whether a sample accommodated in the plurality of sample tubes is infected from the amount of change in data for each of the plurality of channels generated based on signals received from the plurality of light receiving units, wherein the control unit compensates a signal received by the light receiving unit from a signal from each channel detected by inserting a reference material sample into the plurality of mounting holes, and display the amount of change in data for each channel on the display unit.

In an embodiment of the present invention, the thermal block may further include a first temperature sensor for detecting the temperature of the body and a detection sensor for detecting whether the body is opened or closed.

In an embodiment of the present invention, the apparatus may further include a thermal block cover for covering one side of the body in which the mounting hole is formed.

In an embodiment of the present invention, the thermal block cover may include a cover body formed of a thermal conductive material, a second heater inserted in the cover body and for heating the cover body, and a second temperature sensor for detecting the temperature of the cover body.

In an embodiment of the present invention, the control unit may supply power to the second heater to maintain the temperature measured by the second temperature sensor to a predetermined temperature difference with respect to the temperature measured by the first temperature sensor.

In an embodiment of the present invention, the apparatus may further include a first filter provided between the light source unit and the thermal block to transmit light of a selected wavelength with respect to the light irradiated from the light source unit.

In an embodiment of the present invention, the apparatus may further include a second filter provided between the thermal block and the light receiving unit to transmit light of a selected wavelength.

### [Advantageous Effects]

The apparatus for detecting portable isothermal amplification according to the present invention can improve portability due to a simple structure since it does not use a conversion member that converts the movement path of light.

In addition, the present invention can prevent evaporation of the sample and inflow of foreign substances by maintaining the temperature of the thermal block cover higher than the temperature of the thermal block that heats the sample, thereby increasing the reliability of detection.

Here, even if there is an effect not explicitly specified herein, the effects expected by the technical features of the present invention and described effects and provisional effects thereof in the following specification are regarded as described in the specification of the present invention.

### [Description of Drawings]

The above and other aspects, features, and advantages of the present invention will become more apparent to those of ordinary skill in the art by describing embodiments thereof in detail with reference to the accompanying drawings, in which:
FIG. 1 is a block diagram showing components constituting an apparatus for detecting portable isothermal amplification according to an exemplary embodiment of the present invention;
FIG. 2 is a diagram showing a main part of an apparatus for detecting portable isothermal amplification according to an exemplary embodiment of the present invention;
FIG. 3 is a cross-sectional diagram showing a main part of an apparatus for detecting portable isothermal amplification according to an exemplary embodiment of the present invention;
FIG. 4 is a diagram for describing correction of a deviation occurring in an apparatus for detecting portable isothermal amplification according to an exemplary embodiment of the present invention; and
FIG. 5 is a diagram for describing correction of an absorbance detection amount for each channel in an apparatus for detecting portable isothermal amplification according to an exemplary embodiment of the present invention.

### [Explanation of Reference Numerals]

| | |
|---|---|
| 10: apparatus for detecting portable isothermal amplification | 100: thermal block |
| 200: thermal block cover | 300: light source unit |
| 400: first filter | 500: second filter |
| 600: light receiving unit | 710: compensation unit |
| 720: multiplexer | 730: A/D converter |
| 740: display unit | 750: communication unit |
| 760: cooling means temperature control unit | 770 Temperature control unit |
| 780: DC power supply unit | 800: control unit |

### [Modes of the Invention]

In order to fully understand the present invention, operational advantages of the present invention, and objects achieved by the implementation of the present invention, reference should be made to the accompanying drawings illustrating the preferred embodiments of the present invention and the contents described in the accompanying drawings.

Hereinafter, the present invention will be described in detail by describing preferred embodiments of the present invention with reference to the accompanying drawings. The present invention may be embodied in various different forms and is not limited to the embodiments set forth herein. In the drawings, parts unrelated to the description are omitted for clarity and like reference numerals denote like elements.

Throughout the specification, unless explicitly described to the contrary, the word "comprise" and variations such as "comprises" or "comprising" will be understood to imply the inclusion of stated elements but not the exclusion of any other elements. In addition, terms such as "unit," "means," "part," "member," "module," "block." etc., which are described in the specification, mean a unit of a comprehensive configuration that performs at least one function or operation, which may be implemented in hardware or software, or in a combination of hardware and software.

Hereinafter, the embodiments of the present invention are described in detail with reference to the accompanying drawings. In addition, in describing the present invention, when it is determined that a detailed description of a related known configuration or function may obscure the subject matter of the present invention, the detailed description may be omitted.

Hereinafter, a configuration of an apparatus for detecting portable isothermal amplification according to an embodiment of the present invention will be described in detail with reference to the related drawings.

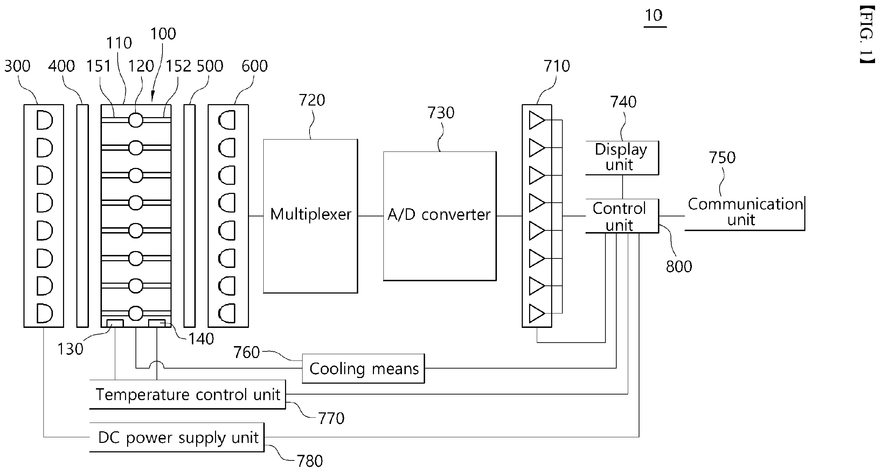

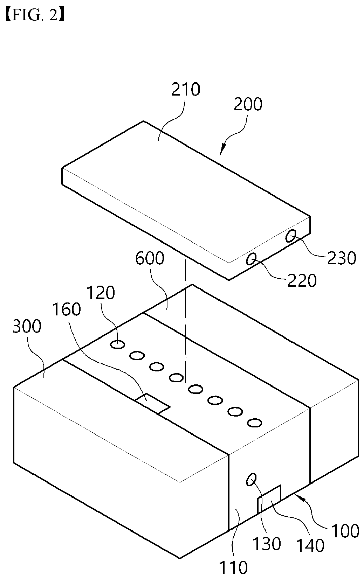

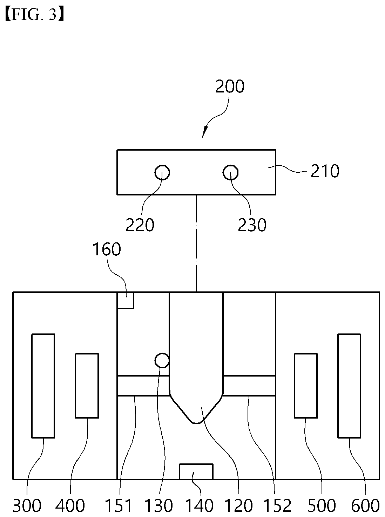

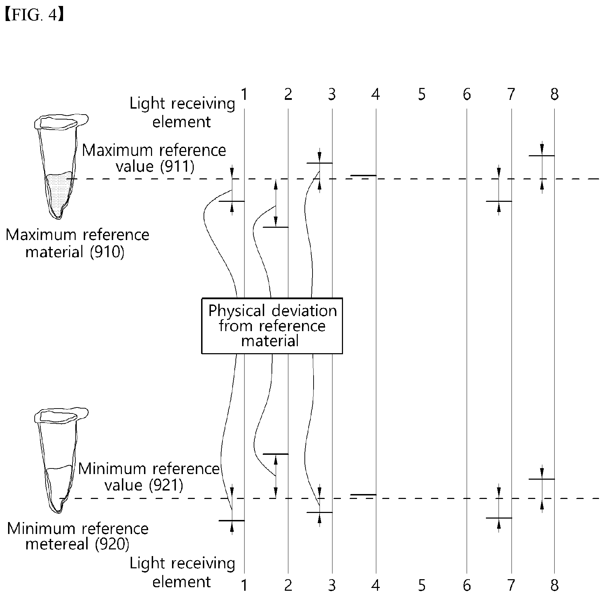

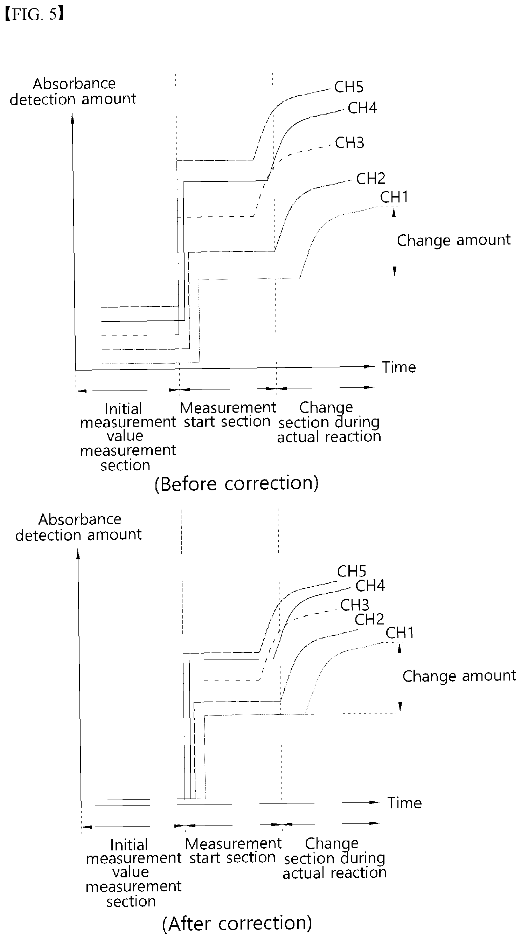

FIG. 1 is a block diagram for schematically describing an apparatus for detecting portable isothermal amplification according to an exemplary embodiment of the present invention, FIG. 2 is an exemplary diagram for describing the main configuration of an apparatus for detecting portable isothermal amplification of the present invention, FIG. 3 is an exemplary diagram for describing the cross-section of FIG. 2, FIG 4 is a diagram for describing correction of a deviation occurring in an apparatus for detecting portable isothermal amplification of the present invention, and FIG. 5 is a diagram for describing correction of an absorbance detection amount for each channel in an apparatus for detecting portable isothermal amplification according to an exemplary embodiment of the present invention.

Referring to FIGS. 1 to 5, respectively, the apparatus for detecting portable isothermal amplification 10 according to an embodiment of the present invention may include a mounting hole 120 in which at least one sample tube is mounted; a thermal block 100 for transferring heat to at least one mounted sample tube; a thermal block cover 200 disposed above the thermal block 100 in which the mounting hole 120 is formed; a light source unit 300 and a light receiving unit 600 positioned on opposite sides with the thermal block 100 interposed therebetween; a temperature control unit 770 for controlling the temperature of the thermal block 100 and the thermal block cover 200; a cooling means 760 for lowering the temperature of the thermal block 100 by a control signal from a control unit 800; a DC power supply unit 780 for supplying DC power to the light source unit 300 to operate the light source unit 300; a multiplexer 720 for selecting one of the detection signals of the light receiving unit 600; a A/D converter 730 for converting the signal selected by the multiplexer 720 into a digital signal; a compensation unit 710 for compensating the signal transmitted from the A/D converter 730; a temperature control unit 770 for identifying whether the sample is infected from an output of the compensation unit 710; a control unit 800 for controlling the operation of the DC power supply unit 780; a display unit 740 for receiving and displaying data from the control unit 800; and a communication unit 750 for transmitting the data received from the control unit 800 to an external device.

The thermal block 100 according to an embodiment of the present invention includes a body 110 formed of a hexahedral type thermal conductive material, a mounting hole 120 formed to a predetermined depth from the upper surface of the body 110, a first heater 140 that is inserted and installed to the body 110 to heat the sample tube mounted in the mounting hole 120, and a first temperature sensor 130 for detecting the temperature of the body 110.

The body 110 according to an embodiment of the present invention may be formed in various shapes other than a hexahedron, and may be made of a material having excellent thermal resistance.

The mounting hole 120 according to an embodiment of the present invention is formed to a predetermined depth from the upper surface of the body 110, and a plurality of mounting holes 120 may be formed at equal intervals so that at least one sample tube is mounted therein.

The sample tube mounted in the mounting hole 120 may be implemented in a cylindrical shape, a square column shape, a triangular column shape, and an inverted cone shape, and the mounting hole 120 may be also implemented in accordance with the shape of the sample tube to react sensitively so as to temperature change.

Here, the sample accommodated in the sample tube refers to all samples that can be obtained from living organisms as biological samples, and may be cells, body fluids, or nucleic acids derived from mammals including humans or microorganisms, etc. Preferably, it may be a sample containing an assayable nucleic acid.

One, two or more of the first temperature sensors 130 may be disposed inside the body 110 so as to sense the temperature inside the body 110 in real time. An embodiment of the present invention describes that the first temperature sensor 130 is disposed on the front surface of the body 110, but the present invention is not limited thereto, and the first temperature sensor may be disposed in various positions, such as may be disposed near each mounting hole 120.

The first heater 140 may be disposed inside the body 110 so that heat can be transferred to at least one sample tube mounted in the mounting hole 120. An embodiment of the present invention describes that the first heater 140 is disposed on the lower surface of the body 110, but the present invention is not limited thereto, and the first heater may be disposed in various positions, such as may be disposed near any one mounting hole 120.

The first heater 140 may be operated to maintain the temperature of the sample tube at a preset temperature, and the temperature of the sample tube may be set within a temperature range set by a user. In this case, the temperature range set by a user may be 30°C to 85°C, but the present invention is not limited thereto.

Here, the first temperature sensor 130 may have a long cylindrical shape and the first heater 140 may have a hexahedral shape, and they may be disposed inside the body 110, but the present invention is not limited thereto.

When the sample tube is mounted in the mounting hole 120 and the thermal block cover 200 covers the upper portion of the mounting hole 120, power is supplied to the first heater 140 according to a control signal from the control unit 800, and at the same time, the DC power supply unit 780 may supply power according to a control signal from the control unit 800 so that the light source unit 300 may be turned on. In addition, a first optical path 151 and a second optical path 152 may be formed on the body 110 to expose opposite sides of the lower ends of the sides of the at least one sample tube mounted in the mounting hole 120.

The first optical path 151 allows light irradiated from the light source unit 300 to be horizontally irradiated to the lower end of one side of the at least one sample tube mounted in the mounting hole 120, and the second optical path 152 allows light that has passed through the lower end of the other side of the at least one sample tube mounted in the mounting hole 120 to be horizontally received by the light receiving unit 600.

A detection sensor 160 may be provided on the upper surface of the body 110 or the upper surface of a body protection member (not shown) made of a non-thermal conductive material covering the body 110 to detect whether the body 110 is opened or closed.

Here, the body protection member (not shown) may be formed to cover the light source unit 300, a first filter 400, a second filter 500, the light receiving unit 600, and all surfaces of the body 110 except the upper surface thereof.

When a cover body 210 is separated from the top of the mounting hole 120 to open the body 110, the detection sensor 160 senses this and transmits a signal to the control unit 800, and when receiving the signal, the control unit 800 controls the first heater 140 and the second heater 230 not to operate. In addition, the control unit 800 may control the DC power supply unit 780 so that DC power to the light source unit 300 is cut off.

Here, the detection sensor 160 may be an IR sensor that is a non-contact sensor or a magnet sensor that is a contact sensor. For example, the IR sensor may be disposed on the upper surface of the body 110 or the upper surface of the body protection member (not shown), or it may be possible to know whether the body 110 is opened or closed by disposing a magnet at the contact portion between the body 110 and the body protection member (not shown) inside the cover body 210 and a cover body protection member (not shown) and installing a reed switch in the direction opposite to the magnet in the body 110, but the present invention is not limited thereto.

Here, the cover body protection member (not shown) is a non-thermal conductive material, and may be formed to cover all surfaces of the cover body 210 except for the lower surface thereof.

The thermal block cover 200 according to an embodiment of the present invention includes a cover body 210 formed of a hexahedral type thermal conductive material, a second heater 230 for heating the cover body 210, and a second temperature sensor 220 for detecting the temperature of the cover body 210.

The thermal block cover 200 may be disposed above the mounting hole 120 formed on the upper surface of the body 110 to prevent evaporation of the sample and inflow of foreign substances in at least one sample tube mounted in the mounting hole 120. Specifically, the thermal block cover 200 may be maintained at a temperature higher than a preset temperature of the body 110 by using the second temperature sensor 220 for sensing temperature and the second heater 230 for providing heat. In this case, for example, the temperature may be set higher than the temperature of the thermal block 100 by 3°C to 5°C, but the present invention is not limited thereto.

Here, the second temperature sensor 220 and the second heater 230 may have a long cylindrical shape and be disposed inside the cover body 210, but the present invention is not limited thereto.

The temperature control unit 770 according to an embodiment of the present invention may vary the temperatures of the body 110 and the cover body 210 according to a control signal from the control unit 800.

That is, the control unit 800 according to an embodiment of the present may amplify the nucleic acids in the sample by supplying power to the first heater 140 to maintain the temperature set by a user based on the temperature of the body 110 measured by the first temperature sensor 130. At the same time, the control unit 800 may prevent evaporation of the sample by supplying power to the second heater 230 to maintain the temperature measured by the second temperature sensor 220 to a predetermined temperature difference (for example, 3°C) with respect to the temperature measured by the first temperature sensor 130. That is, when the temperature measured by the second temperature sensor 220 is within a predetermined temperature difference with respect to the temperature measured by the first temperature sensor 130, the control unit 800 may control the second heater 230 to operate.

Meanwhile, the control unit 800 may control the operation of the cooling means 760 to lower the temperature of the body 110 when the temperature of the body 110 measured by the first temperature sensor 130 is higher than a preset temperature.

Here, the cooling means 760 may be a member that generates wind to lower the temperature of the body 110 and be configured to include a propeller and a motor, or may be a cooling coil spaced apart from the first heater 140 disposed inside the body 110 to prevent heat exchange to lower the temperature of the body 110.

The light source unit 300 according to an embodiment of the present invention may irradiate light in a horizontal direction to at least one sample tube through the first optical path 151.

The light source unit 300 may include a plurality of light source elements, and light irradiated from each light source element may be horizontally irradiated to the lower end of one side of the sample tube mounted in the mounting hole 120 through the first optical path 151. In this case, the light source element may be, for example, a light emitting diode (LED).

The first filter 400 according to an embodiment of the present invention may be located between the light source unit 300 and the thermal block 100, and may allow the wavelength of irradiated light to be irradiated with a constant wavelength to the lower end of one side of the sample tube mounted in the mounting hole 120. For example, the first filter 400 may filter any one of a wavelength of 490 nm, 535 nm, or 590 nm from the irradiated light.

As such, the irradiated light may allow determining whether the amplified sample is infected according to the change of turbidity of the sample tube according to the amplification of the sample and the corresponding amount of fluorescence generated.

The second filter 500 according to an embodiment of the present invention may be located between the thermal block 100 and the light receiving unit 600, and may allow light that has passed through the lower end of the one side of at least one sample tube mounted in the mounting hole 120 to be horizontally received by the light receiving unit 600. For example, the second filter 500 may filter an emission wavelength for measuring fluorescence to any one of a wavelength of 520 nm, 556 nm, or 610 nm.

The first filter 400 and the second filter 500 according to an embodiment of the present invention may be selectively used by a user. For example, when a user uses a light source emitting a wavelength of 650 nm, the first filter 400 and the second filter 500 may not be used, and when a light source of other wavelengths is used, the first filter 400 and the second filter 500 may be used.

The light receiving unit 600 according to an embodiment of the present invention may receive light that has passed through the amplified sample and transmit a detection signal to the control unit 800. Specifically, the detection signal received by the light receiving unit 600 may be selected by the multiplexer 720, the signal selected by the multiplexer 720 may be transmitted to the A/D converter 730, and the compensation unit 710 may compensate the signal transmitted from the A/D converter 730 and transmit it to the control unit 800.

The light receiving unit 600 may include a plurality of light receiving elements that sense and receive light passing through the amplified sample, and the light receiving element may be, for example, a photodiode (PD).

Here, a path through which light irradiated from the light source unit 300 is transmitted to the light receiving element of the light receiving unit 600 may be referred to as a channel. Specifically, a path through which the light irradiated from the light source unit 300 passes through the first filter 400 and passes through the sample tube mounted in the mounting hole 120 through the first optical path 151 and the light passing through the sample tube passes through the second filter 500 and then is detected by the light receiving element of the light receiving unit 600, or a path through which the light irradiated from the light source unit 300 passes through the sample tube mounted in the mounting hole 120 through the first optical path 151 and the light passing through the sample tube is detected by the light receiving element of the light receiving unit 600 is referred to as a channel, and the present invention may be provided with as many as channels the number of mounting holes 120.

The multiplexer 720 according to an embodiment of the present invention may process a signal to be inspected, in an order desired by a user, among a plurality of detection signals received by the light receiving unit 600, and transmit one selected detection signal to the A/D converter 730.

An analog signal selected by the multiplexer 720 is converted into a digital signal by the A/D converter 730.

The compensation unit 710 according to an embodiment of the present invention may correct a deviation caused by a temperature or a wavelength of a light source, etc. among a plurality of detection signals received by the light receiving unit 600.

More specifically, before performing a test of a sample using the present invention, after inserting a sample of a maximum reference material 910 into at least one sample tube, it is mounted in the mounting hole 120 and tested.

The test at this time is the same as the test process of the sample according to the present invention, and the light receiving element of the light receiving unit 600 outputs a current according to the detected value. At this time, deviation may occur in the output current of each light receiving element due to various physical causes.

For example, due to a non-uniformity in heat transfer characteristics of the body 110, even if a light source element or a light receiving element having the same performance is used, there may be differences in the characteristics of the elements, and due to this difference, a deviation may occur in the result value of testing the same sample.

This difference is input to the control unit 800, and the control unit 800 may control the compensation unit 710 to compensate it to be equal to a preset maximum reference value 911.

In the above-described method, after inserting a sample of a minimum reference material 920 into at least one sample tube and mounting the sample tube in the mounting hole 120, it is tested and the compensation unit 710 may correct a deviation generated by the test to be equal to a preset minimum reference value 921.

The compensation unit 710 may compensate the output current of each of the light receiving elements of the light receiving unit 600, and at this time, the compensation value for controlling the compensation unit 710 by the control unit 800 may be stored in a memory, and then may be applied when testing a general sample.

Accordingly, the present invention may compensate for deviations due to various causes of a plurality of detection signals received by the light receiving unit 600, thereby increasing the reliability of a test.

In another embodiment, the compensation unit 710 of the present invention may be omitted and the control unit 800 may compensate for the deviation of the detection signal, or the compensation unit 710 of the present invention may be installed at the front end of the multiplexer 720.

Specifically, before performing a test of a sample using the present invention, after inserting a sample of the maximum reference material 910 or the minimum reference material 920 into at least one sample tube, it is mounted in the mounting hole 120 and tested, and a deviation generated by the test is input into the control unit 800.

Next, the control unit 800 stores in a memory a compensation value that the generated deviation becomes equal to a preset maximum reference value 911 or a preset minimum reference value 921, and may compensate a deviation by applying the compensation value when testing a general sample. In this way, the control unit 800 displays the difference in the detection level after a certain period of time compared to the initial heating on the display unit 740 so that a user can determine, and through the corresponding display the user may determine whether the amplified sample is infected according to the change of turbidity of the sample tube according to the amplification of the sample and the corresponding amount of fluorescence generated. Alternatively, the controller 800 may determine whether the sample is infected according to a detection level that changes according to the amplification of the sample, and display it on the display unit 740 so that the user can determine.

Meanwhile, in another embodiment, the control unit 800 of the present invention may correct a deviation caused by differences in physical structure or characteristics of each channel among a plurality of detection signals received by the light receiving unit 600.

Specifically, referring to FIG. 5, as in an initial measurement value measurement section before correction, the initial measurement value of the absorbance for each channel may appear different due to differences in physical structure or characteristics of each channel.

That is, the control unit 800 may set a reference value which can be the same reference for all channels in the initial measurement value measurement section, for example, based on the received initial measurement value when there are no tubes in all holes, and may use it to correct the channel deviation.

In this case, in FIG. 5, the 'initial measurement value measurement section' is a measurement section for measuring when there is no tube, and a 'measurement start section' is a section in which the sample and material in each tube containing the sample are visible as it is, and if the temperature changes after that, the amount of change compared to the initial characteristics may appear in a 'change section during actual reaction'.

Accordingly, the control unit 800 may add or subtract the actual measurement start result of each channel over time and the change in level at the time of reaction to the corresponding initial measurement value based on the initial measurement value for each channel measured in the initial measurement value measurement section, and may express it as in the 'after correction' in FIG. 5.

For example, in FIG. 5, based on the initial measurement value of channel 1, it is expressed to correspond to the initial measurement value of channel 1 as in the 'after correction' by adding or subtracting the deviation of the initial measurement value of other channels, and it can be seen that the amount of change in the change section during actual reaction is reflected as it is even after correction.

The result corrected by the control unit 800 is transmitted to the display unit 740, and the user can intuitively view the amount of change in data before and after the heat is transferred to the sample tube containing the sample. In this case, the amount of change in the data may be, for example, a change amount of the absorbance detection amount or a change amount of the fluorescence generation amount.

In this way, according to the present invention, it is possible to determine whether nucleic acids in a sample are amplified by correcting deviations of a plurality of detection signals received by the light receiving unit 600. As described above, the control unit 800 may detect whether a sample accommodated in at least one sample tube is infected from the output of the compensation unit 710 or the A/D converter 730.

Here, the control unit 800 may be a microcontroller unit (MCU) having a memory capable of embedding a program for diagnosing a disease using transmitted light detected by the light receiving unit 600.

Although not shown in the drawing, a setting input unit capable of inputting user settings for control of the control unit 800 may be further included. The setting input unit may select temperature setting, absorbance measurement mode, and fluorescence measurement mode.

The setting input unit may be integrated with the display unit 740 when the display unit 740 is a display device capable of a touch input.

The display unit 740 displays the result detected by the control unit 800 so that the user can immediately check the test result.

The communication unit 750 serves to communicate with an external device or the like. For example, the communication unit may monitor the detection result with an external device (computer, mobile phone, etc.) using RS-232 communication or wireless communication, or transmit setting values through an external device so that the user setting can be input to the setting input unit.

As described above, the present invention may simplify the structure by arranging each light source element of the light source unit 300 and each light receiving element of the light receiving unit 600 to face each other with the mounting hole 120 interposed therebetween, thereby reducing the volume and improving portability.

Even if all the components constituting the embodiments of the present invention described above are described as being combined into one or operating in combination, the present invention is not necessarily limited to these embodiments. That is, as long as it is within the scope of the object of the present invention, one or more of the components may be selectively combined and operated. In addition, although all the components may be implemented as one independent hardware, but it may be implemented as a computer program having a program module that performs some or all functions combined in one or more pieces of hardware by selectively combining some or all of the components.

The above description is merely illustrative of the technical idea of the present invention, and those of ordinary skill in the art will be possible to make various modifications, changes, and substitutions within the scope not departing from the essential characteristics of the present invention. Accordingly, the embodiments disclosed in the present invention and the accompanying drawings are not intended to limit the technical idea of the present invention, but are for illustrative purposes, and the scope of the technical idea of the present invention is not limited by these embodiments and the accompanying drawings. The scope of protection of the present invention should be construed by the claims below, and all technical ideas within the scope equivalent thereto should be construed as being included in the scope of the present invention.

## Claims

1. An apparatus for detecting portable isothermal amplification, comprising:
a display unit;
a thermal block comprising a body made of a thermal conductive material, a first heater inserted into the body to heat the body, a plurality of mounting holes formed in the body to respectively mount a plurality of sample tubes, and a plurality of optical paths communicating with each of the plurality of mounting holes on each side of the body (the plurality of optical paths and the plurality of mounting holes form a plurality of channels);
a plurality of light source units disposed on one side of the thermal block and each irradiating light to the plurality of sample tubes mounted in the plurality of mounting holes through the optical path;
a plurality of light receiving units disposed on the other side of the thermal block and each receiving light transmitted through the plurality of sample tubes mounted in the plurality of mounting holes through the optical path; and
a control unit for detecting whether a sample accommodated in the plurality of sample tubes is infected from the amount of change in data for each of the plurality of channels generated based on signals received from the plurality of light receiving units,
wherein the control unit, using an initial measurement value measured (in an initial measurement value measurement section) when there is no sample tube in the plurality of mounting holes, adds or subtracts a change value in level of an actual measurement result of the plurality of channels to/from the initial measurement value and display the amount of change in data for each of the plurality of channels on the display unit.

2. An apparatus for detecting portable isothermal amplification, comprising:
a display unit;
a thermal block comprising a body made of a thermal conductive material, a first heater inserted into the body to heat the body, a plurality of mounting holes formed in the body to respectively mount a plurality of sample tubes, and a plurality of optical paths communicating with each of the plurality of mounting holes on each side of the body (the plurality of optical paths and the plurality of mounting holes form a plurality of channels);
a plurality of light source units disposed on one side of the thermal block and each irradiating light to the plurality of sample tubes mounted in the plurality of mounting holes through the optical path;
a plurality of light receiving units disposed on the other side of the thermal block and each receiving light transmitted through the plurality of sample tubes mounted in the plurality of mounting holes through the optical path; and
a control unit for detecting whether a sample accommodated in the plurality of sample tubes is infected from the amount of change in data for each of the plurality of channels generated based on signals received from the plurality of light receiving units,
wherein the control unit compensates a signal received by the light receiving unit from a signal from each channel detected by inserting a reference material sample into the plurality of mounting holes, and display the amount of change in data for each of the plurality of channels on the display unit.

3. The apparatus of claim 2, wherein the thermal block further comprises:
a first temperature sensor for detecting the temperature of the body; and
a detection sensor for detecting whether the body is opened or closed.

4. The apparatus of at least one of the preceding claims, further comprising a thermal block cover for covering one side of the body in which the mounting hole is formed.

5. The apparatus of claim 4, wherein the thermal block cover comprises:
a cover body formed of a thermal conductive material;
a second heater inserted in the cover body and for heating the cover body; and
a second temperature sensor for detecting the temperature of the cover body.

6. The apparatus of claim 5, wherein the control unit supplies power to the second heater to maintain the temperature measured by the second temperature sensor to a predetermined temperature difference with respect to the temperature measured by the first temperature sensor.

7. The apparatus of at least one of the preceding claims, further comprising a first filter provided between the light source unit and the thermal block to transmit light of a selected wavelength with respect to the light irradiated from the light source unit.

8. The apparatus of at least one of the preceding claims, further comprising a second filter provided between the thermal block and the light receiving unit to transmit light of a selected wavelength.
